# EUROPEAN PATENT APPLICATION

(11) **EP 3 885 158 A1**
(43) Date of publication of application: **29.09.2021**
(21) Application number: 19904206.0
(22) Date of filing: 13.12.2019
(51) Int. Cl.: B60C 1/00, B60C 9/22, B60C 17/00, B60C 11/00

(54) **RUN-FLAT TIRE**

(30) Priority: 26.12.2018 JP 2018243724
(71) Applicant: BRIDGESTONE CORPORATION, Chuo-ku Tokyo 104-8340 (JP)
(72) Inventor: KATAYAMA Masahiro, Chuo-ku, Tokyo 104-8340 (JP)
(74) Representative: Oxley, Robin John George
(86) International application number: PCT/JP2019/048957
(87) International publication number: WO 2020/137627

(57) **Abstract**

A run-flat tire (10) is provided with a belt layer (50) having a circumferential cord extending along the tire circumferential direction covered with a resin material, a first resin reinforcing layer (80) provided on the outside of the belt layer (50) of the tire radial direction and formed of a resin material, and a second resin reinforcing layer (90) provided on the inside of the belt layer (50) of the tire radial direction and formed of a resin material, wherein the first resin reinforcing layer (80) and the second resin reinforcing layer (90) have a predetermined width along the tire width direction and are provided so as to sandwich the tire radial direction outside end of a side reinforcing rubber (70) from the outside of the tire radial direction and the inside of the tire radial direction.

## Description

### [Technical Field]

The present invention relates to a run-flat tire of a side reinforcing rubber type.

### [Background Art]

Conventionally, a run-flat tire provided with a side reinforcing rubber having a crescent sectional shape is widely known (see Patent Literature 1).

### [Citation List]

### [Patent Literature]

[PTL 1] Japanese Unexamined Patent Application Publication No. 2011-031838

### [Summary of Invention]

In the case of the run-flat tire of the side reinforcing rubber type as described above, in order to improve the performance in the run flat traveling and to extend the run flat traveling distance, it is desirable to improve the bending rigidity of the belt layer. This is to suppress a phenomenon (so-called "outer bending ") in which the tire width direction end of the belt layer swells outward from the tire radial direction.

However, simply adding a reinforcing layer or the like to improve the bending rigidity of the belt layer increases the weight of the tire or adversely affects other performance (steering stability, wear resistance, rolling resistance, etc.), which is undesirable.

Accordingly, an object of the present invention is to provide a run-flat tire capable of improving performance during run-flat traveling and extending the run-flat traveling distance while suppressing an increase in tire weight and other adverse effects on performance.

One aspect of the present invention is a run-flat tire including a tread portion in contact with a road surface, a tire side portion continuous to the tread portion and positioned inside in the tire radial direction of the tread portion, and a side reinforcing rubber provided in the tire side portion. The fun-flat tire further includes a belt layer having a circumferential cord extending along a tire circumferential direction covered with a resin material, a first resin reinforcing layer formed of a resin material and provided outside the tire radial direction of the belt layer, and a second resin reinforcing layer formed of a resin material and provided inside the tire radial direction of the belt layer. The first resin reinforcing layer and the second resin reinforcing layer have a prescribed width along the tire width direction and are provided so as to sandwich the tire radial direction outside end of the side reinforcing rubber from the tire radial direction outer side and the tire radial direction inner side.

### [Brief Description of Drawings]

FIG. 1 is a cross-sectional view of a run-flat tire 10.
FIG. 2 is a partially enlarged cross-sectional view of the run-flat tire 10.
FIG. 3 is an exploded plan view of a portion of the run-flat tire 10.
FIG. 4 is a partially enlarged cross-sectional view of a run-flat tire 10 A pertaining to modified example.

### [Description of Embodiments]

Embodiments will be described below with reference to the drawings. The same functions and configurations are denoted by the same or similar reference numerals, and descriptions thereof are omitted as appropriate.

### (1) Overall structure of tire

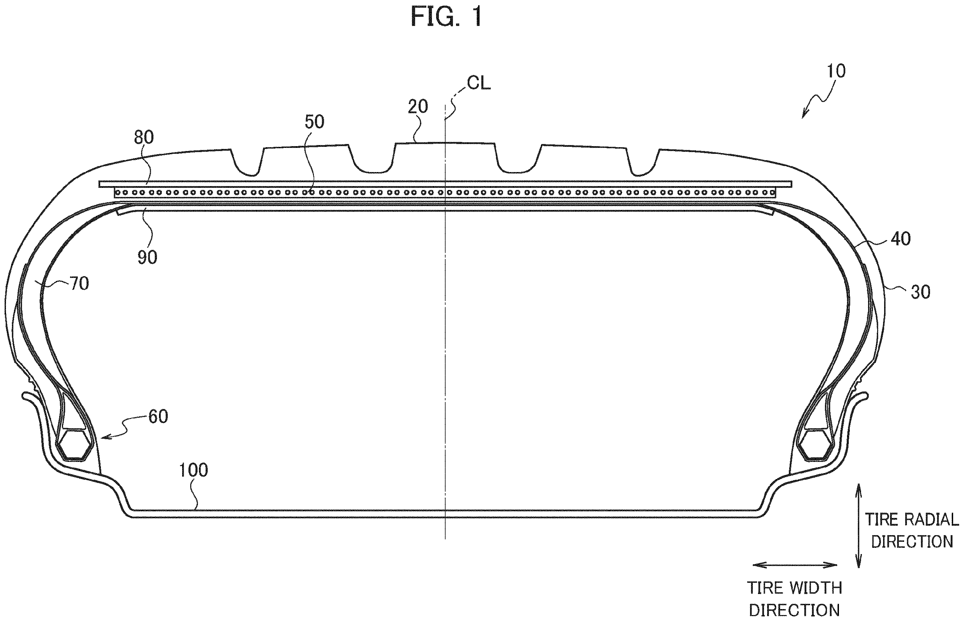

FIG. 1 is a sectional view of the run-flat tire 10 according to the present embodiment. Specifically, FIG. 1 is a cross-sectional view of the run-flat tire 10 along tire width direction and tire radial direction. In FIG. 1, the sectional hatching is not shown (hereinafter the same). In order to facilitate the differentiation of similar components, a schematic pattern is shown for some components.

The run-flat tire 10 is capable of running (run flat running) at a constant speed for a certain distance (80 km at 80 km/h) even when the internal pressure (air pressure) is significantly reduced due to a puncture or the like (e.g., 0 kPa).

As shown in FIG. 1, the run-flat tire 10 includes a tread portion 20, a tire side portion 30, a carcass 40, a belt layer 50, a bead portion 60, a side reinforcing rubber 70, a first resin reinforcing layer 80, and a second resin reinforcing layer 90.

The tread portion 20 is a part in contact with a road surface (not shown). On the tread portion 20, a pattern (not shown) corresponding to the use environment of the run-flat tire 10 and the type of vehicle to be mounted is formed.

The tire side portion 30 continues to the tread portion 20 and is positioned inside in the tire radial direction of the tread portion 20. The tire side portion 30 is a region from the tire width direction outside end of the tread portion 20 to the upper end of the bead portion 60. The tire side portion 30 is sometimes referred to as a side wall or the like.

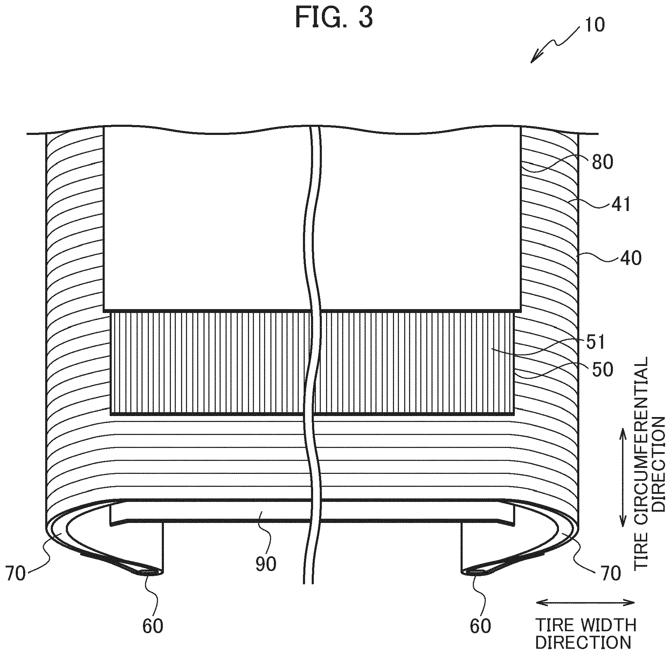

The carcass 40 forms a skeleton (tire skeleton) of a run-flat tire 10. The carcass 40 has a radial structure in which a carcass cord 41 (not shown in FIG. 1, see FIG. 3) arranged radially along a tire radial direction is covered with a rubber material. However, the present invention is not limited to a radial structure, and a bias structure in which the carcass cords are arranged so as to cross each other in the tire radial direction.

The carcass cord 41 is not particularly limited, and may be formed of an organic fiber cord in the same manner as a tire for a standard passenger car (including minivans and SUV (Sport Utility Vehicles)).

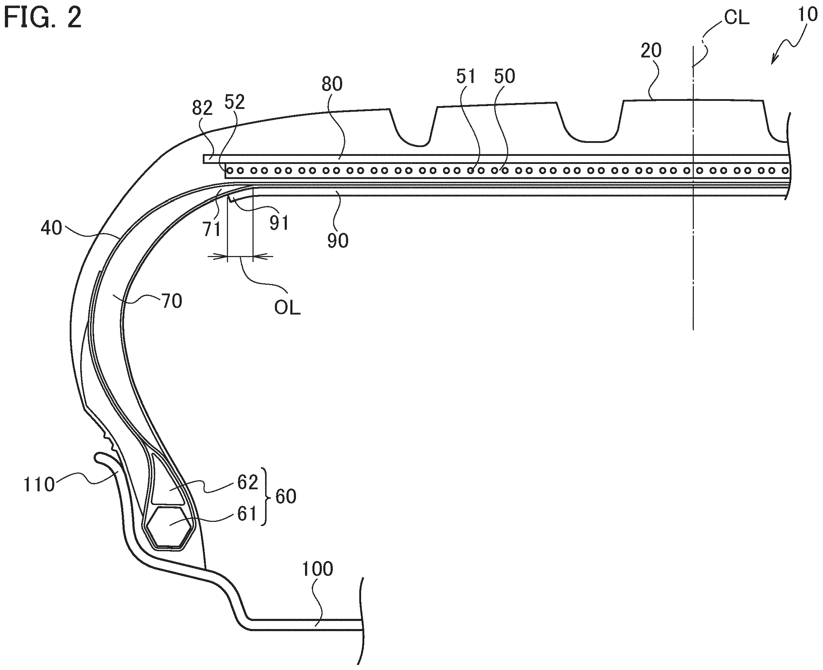

The belt layer 50 is provided inside the tire radial direction of the tread portion 20. The belt layer 50 has a circumferential cord 51 (not shown in FIG. 1, see FIG. 2), and the circumferential cord 51 is a single-layer spiral belt covered with a resin material.

Specifically, the circumferential cord 51 extends along the tire circumferential direction. More specifically, the circumferential cord 51 covered with a resin material is spirally wound along the tire circumferential direction to form the belt layer 50. The circumferential cords 51 may be wound in units of one or a plurality of cords.

As the resin for covering the circumferential cord 51, a resin material having a higher tensile elastic modulus than the tensile elastic modulus of the rubber material constituting the tire side portion 30 and the rubber material constituting the tread portion 20 are used. As the resin for covering the circumferential cord 51, a thermoplastic resin having elasticity, a thermoplastic elastomer (TPE), a thermosetting resin or the like can be used. It is desirable to use a thermoplastic elastomer in consideration of elasticity in running and moldability in manufacturing.

The thermoplastic elastomer includes a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), a dynamically crosslinked thermoplastic elastomer (TPV), and the like.

Examples of the thermoplastic resin include polyurethane resin, polyolefin resin, vinyl chloride resin, polyamide resin, and the like. Further, as the thermoplastic resin material, for example, a material having a deflection temperature under load (At 0.45 MPa Load) specified in ISO 75 -2 or ASTM D648 of 78 ° C or more, a tensile yield strength specified in JIS K7113 of 10 MPa or more, a tensile fracture elongation specified in JIS K7113 of 50% or more, and a Vicat softening temperature (method A) specified in JIS K7206 of 130 ° C or more can be used.

The bead portion 60 continues to tire side portion 30 and is positioned inside in tire radial direction of tire side portion 30. The bead portion 60 is an annular shape extending to the tire circumferential direction.

The bead portion 60 is locked to a flange portion 110 (not shown in FIG. 1, see FIG. 2) formed at the radially outside end of the rim wheel 100.

The side reinforcing rubber 70 is provided in the tire side portion 30. The side reinforcing rubber 70 has a crescent shape in cross section, and supports a load of a vehicle (not shown) to which the run-flat tire 10 is mounted when the internal pressure of the run-flat tire 10 greatly decreases.

The side reinforcing rubber 70 may be formed of one or more kinds of rubber materials, or may contain other materials (Short fiber, resin, etc.) if the rubber material is a main component.

The first resin reinforcing layer 80 is provided outside the belt layer 50 of the tire radial direction. The first resin reinforcing layer 80 is formed of a resin material.

The second resin reinforcing layer 90 is provided inside the belt layer 50 of the tire radial direction. The second resin reinforcing layer 90 is also formed of a resin material.

The first resin reinforcing layer 80 and the second resin reinforcing layer 90 may be formed of the same resin material as the resin material covering the circumferential cord 51. However, the first resin reinforcing layer 80 and the second resin reinforcing layer 90 may not be formed of the same resin material as the resin material covering the circumferential cord 51. That is, as long as the resin material described above can be used for the belt layer 50, the resin materials used for the belt layer 50 and the first resin reinforcing layer 80 or the second resin reinforcing layer 90 may be different.

An inner liner (not shown) may be provided between the carcass 40 and the second resin reinforcing layer 90 for preventing leakage of a gas such as air filled in an internal space of the run-flat tire 10 assembled to the rim wheel 100. However, in a portion of the inner surface of the tread portion 20 on the tire, the second resin reinforcing layer 90 may also have the function of an inner liner without providing the inner liner.

### (2) Detailed structure of inside tire radial direction of tread portion

FIG. 2 is a partially enlarged sectional view of the run-flat tire 10. Specifically, FIG. 2 is a partially enlarged sectional view of the run-flat tire 10 taken along the tire width direction and the tire radial direction. FIG. 3 is a partially exploded plan view of the run-flat tire 10.

As shown in FIGs. 2 and 3, the bead portion 60 has a bead core 61 and a bead filler 62. In this structure example, the bead core 61 has a popular configuration and is formed by twisting a plurality of metal cords formed of steel or the like.

The bead filler 62 is a reinforcing member filled in a gap between the carcasses 40 folded back via the bead core 61, and is formed by using a rubber member harder than other parts.

The bead portion 60 may comprise a bead core formed by covering a metal cord with a resin material or a bead core formed by using a resin material.

In this embodiment, the first resin reinforcing layer 80 is a resin sheet formed of only a resin material. The second resin reinforcing layer 90 is also a resin sheet formed of only a resin material. That is, the first resin reinforcing layer 80 and the second resin reinforcing layer 90 do not have a cord or the like, and are annular sheets along the tire circumferential direction.

The first resin reinforcing layer 80 has a predetermined width along the tire width direction. Specifically, the first resin reinforcing layer 80 is provided from one shoulder portion of the tread portion 20 to the other shoulder portion of the tread portion 20. However, the first resin reinforcing layer 80 may be divided into several parts in tire width direction.

Similarly to the first resin reinforcing layer 80, the second resin reinforcing layer 90 has a predetermined width along the tire width direction. Specifically, the second resin reinforcing layer 90 is provided from one shoulder portion of the tread portion 20 to the other shoulder portion of the tread portion 20.

The first resin reinforcing layer 80 and the second resin reinforcing layer 90 are provided so as to sandwich the tire radial direction outside end of the side reinforcing rubber 70, specifically, a radial outside end 71, from the tire radial direction outer side and the tire radial direction inner side. More specifically, the first resin reinforcing layer 80 sandwiches the radial outside end 71 of the side reinforcing rubber 70 from the outside of the tire radial direction, and the second resin reinforcing layer 90 sandwiches the radial outside end 71 of the side reinforcing rubber 70 from the inside of the tire radial direction.

In the present embodiment, the side reinforcing rubber 70 and the belt layer 50 have overlapping portion OL in the tire width direction. The first resin reinforcing layer 80 and the second resin reinforcing layer 90 are provided so as to sandwich the overlapping portion OL.

Specifically, a width outside end 52 of the belt layer 50, which is the tire width direction outside end, is positioned outside the tire width direction than the radial outside end 71 of the side reinforcing rubber 70.

A width outside end 82 which is the tire width direction outside end of the first resin reinforcing layer 80 is positioned outside the belt layer than the radial outside end 71 of the side reinforcing rubber 70 and the width outside end 52 of the tire width direction 50.

Further, a width outside end 91 which is the tire width direction outside end of the second resin reinforcing layer 90 is positioned on the tire width direction outer side than the radial outside end 71 of the side reinforcing rubber 70. The width outside end 91 of the second resin reinforcing layer 90 is positioned inside the tire width direction than the width outside end 82 of the first resin reinforcing layer 80.

Due to this positional relationship, the first resin reinforcing layer 80 and the second resin reinforcing layer 90 are provided so as to sandwich the overlapping portion OL, that is, the belt layer 50 and the side reinforcing rubber 70.

### (3) Function and effects

According to the embodiment described above, the following effects can be obtained. In the run-flat tire 10, the first resin reinforcing layer 80 and the second resin reinforcing layer 90 are respectively provided on the outside the tire radial direction of the belt layer 50 and the inside the tire radial direction of the belt layer 50 having the circumferential cord 51 covered with a resin material, so that the bending rigidity of the belt layer is improved.

Since the first resin reinforcing layer 80 and the second resin reinforcing layer 90 are provided so as to sandwich the radial outside end 71 of the side reinforcing rubber 70 from the outside of the tire radial direction and the inside of the tire radial direction, the rigidity around the radial outside end 71 of the side reinforcing rubber 70, which is easily deformed during run-flat traveling, can be improved.

This effectively suppresses a phenomenon that the width outside end 52 of the belt layer 50 bends to the outside of the tire radial direction during run-flat traveling (so-called "outer bending"). In addition, since the first resin reinforcing layer 80 and the second resin reinforcing layer 90 are made of a resin material, the tire weight does not increase significantly, and adverse effects on other performances (steering stability, wear resistance, rolling resistance, etc.) are also small.

That is, the run-flat tire 10 can improve performance during run-flat traveling and extend the run-flat traveling distance while suppressing an increase in tire weight and adverse effects on other performances.

In this embodiment, the first resin reinforcing layer 80 and the second resin reinforcing layer 90 are annular sheets formed of a resin material.

Therefore, while improving the bending rigidity of the belt layer 50 by the first resin reinforcing layer 80 provided on the outside the tire radial direction and having a high contribution degree to the bending rigidity improvement of the belt layer 50, the second resin reinforcing layer 90 provided on the inside the tire radial direction can achieve both further improvement of the bending rigidity of the belt layer 50 and suppression of increase in the weight of the tire in a high dimension.

In the present embodiment, the first resin reinforcing layer 80 and the second resin reinforcing layer 90 are provided so as to sandwich the overlapping portion OL between the side reinforcing rubber 70 and the belt layer 50. Therefore, the rigidity around the radial outside end 71 of the side reinforcing rubber 70 which is easy to be deformed during run flat traveling can be further improved. This can contribute to further performance improvement in run-flat traveling and further extension of run-flat traveling distance.

In the present embodiment, the width outside end 91 of the second resin reinforcing layer 90 is positioned inside the tire width direction more than the width outside end 82 of the first resin reinforcing layer 80. Therefore, the weight increase of the second resin reinforcing layer 90 can be suppressed, and the width of the second resin reinforcing layer 90 becomes narrower than the width of the belt layer 50, so that adverse effects on other performances are less.

### (4) Other Embodiments

Although the contents of the present invention have been described above with reference to the examples, it will be obvious to those skilled in the art that the present invention is not limited to these descriptions and that various modifications and improvements are possible.

For example, in the embodiment described above, the second resin reinforcement layer 90 has no cords and the like and is an annular sheet along the tire circumferential direction, but the second resin reinforcement layer 90 may have cords extending along the tire width direction.

In the above-described embodiment, the first resin reinforcing layer 80 and the second resin reinforcing layer 90 are provided so as to sandwich the overlapping portion OL between the side reinforcing rubber 70 and the belt layer 50, but the first resin reinforcing layer 80 and the second resin reinforcing layer 90 may not necessarily be provided so as to sandwich the overlapping portion OL.

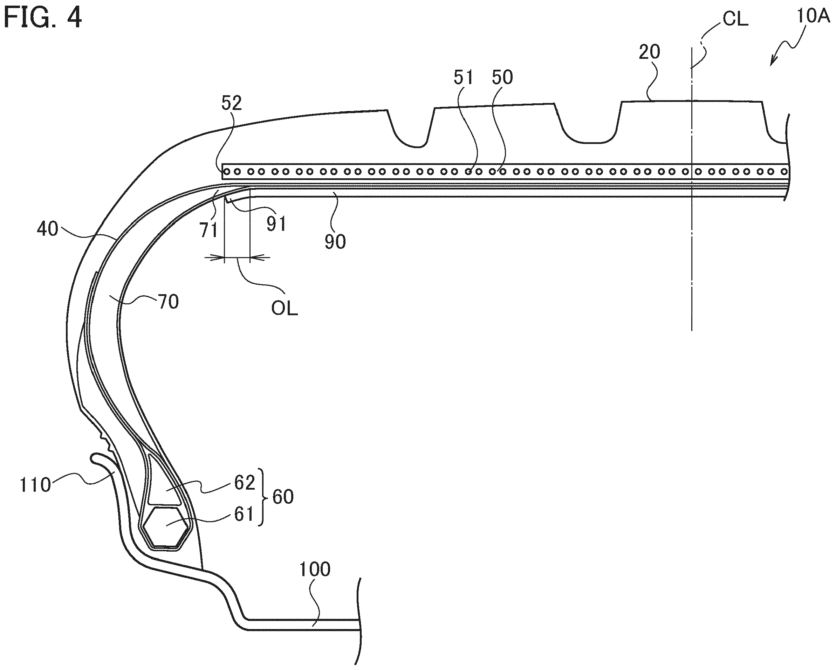

Further, the first resin reinforcing layer 80 may not be provided. FIG. 4 is a partially enlarged sectional view of a run-flat tire 10 A according to the modified example.

In the run-flat tire 10 A shown in FIG. 4, the belt layer 50 may also have the function of the first resin reinforcing layer 80. Thus, the same effect as that of the run-flat tire 10 can be obtained.

While embodiments of the invention have been described as above, it should not be understood that the statements and drawings which form part of this disclosure are intended to limit the invention. Various alternative embodiments, examples and operating techniques will become apparent to those skilled in the art from this disclosure.

### [Reference Signs List]

- 10, 10 A: Run flat tire
- 20: Tread portion
- 30: Tire side portion
- 40: Carcass
- 41: Carcass cord
- 50: Belt layer
- 51: Circumferential cord
- 52: Width outside end
- 60: Bead portion
- 61: Bead Core
- 62: Bead filler
- 70: Side reinforcing rubber
- 71: Radial outside end
- 80: First resin reinforcing layer
- 82: Width outside end
- 90: Second resin reinforcing layer
- 91: Width outside end
- 100: Rim wheel
- 110: flange portion
- OL: Overlapping portion

## Claims

1. A run-flat tire comprising:
a tread portion in contact with a road surface;
a tire side portion continuous to the tread portion and positioned inside in the tire radial direction of the tread portion; and
a side reinforcing rubber provided in the tire side portion, wherein the fun-flat tire comprises:
a belt layer having a circumferential cord extending along a tire circumferential direction covered with a resin material;
a first resin reinforcing layer formed of a resin material and provided outside the tire radial direction of the belt layer; and
a second resin reinforcing layer formed of a resin material and provided inside the tire radial direction of the belt layer, wherein
the first resin reinforcing layer and the second resin reinforcing layer have a prescribed width along the tire width direction and are provided so as to sandwich the tire radial direction outside end of the side reinforcing rubber from the tire radial direction outer side and the tire radial direction inner side.

2. The run-flat tire according to claim 1, wherein the first resin reinforcing layer and the second resin reinforcing layer are resin sheets formed of only a resin material.

3. The run-flat tire according to claim 1 or 2, wherein the side reinforcing rubber and the belt layer have an overlapping portion in tire width direction; and
the first resin reinforcing layer and the second resin reinforcing layer are provided so as to sandwich the overlapping portion.

4. The run-flat tire according to any one of claims 1 to 3, wherein the tire width direction outside end of the second resin reinforcing layer is positioned inside the tire width direction than the tire width direction outside end of the first resin reinforcing layer.
